Europäisches Patentamt

European Patent Office

Office européen des brevets

(19)

(11) Veröffentlichungsnummer: **0 244 857 B1**

# EUROPÄISCHE PATENTSCHRIFT

(45) Veröffentlichungstag der Patentschrift: **10.04.91**

(21) Anmeldenummer: **87106595.9**

(22) Anmeldetag: **07.05.87**

(51) Int. Cl.⁵: **C08L 69/00**, //(C08L69/00, 51:00,51:06)

Die Akte enthält technische Angaben, die nach dem Eingang der Anmeldung eingereicht wurden und die nicht in dieser Patentschrift enthalten sind.

(54) **Thermoplastische Formmasse auf Basis von Polycarbonat, 2 Pfropfmischpolymerisaten unterschiedlicher Pfropfgrundlage (ASA + AES) und Vinylaromat/AN enthaltenden Copolymerisaten.**

(30) Priorität: **09.05.86 DE 3615608**

(43) Veröffentlichungstag der Anmeldung:
**11.11.87 Patentblatt 87/46**

(45) Bekanntmachung des Hinweises auf die Patenterteilung:
**10.04.91 Patentblatt 91/15**

(84) Benannte Vertragsstaaten:
**BE DE FR GB NL**

(56) Entgegenhaltungen:
**EP-A- 0 096 301**
**EP-A- 0 135 801**
**US-A- 4 560 725**

(73) Patentinhaber: **BASF Aktiengesellschaft**
**Carl-Bosch-Strasse 38**
**W-6700 Ludwigshafen(DE)**

(72) Erfinder: **Wassmuth, Georg, Dr.**
**Von-Sturmfeder-Strasse 60**
**W-6700 Ludwigshafen(DE)**
Erfinder: **Ruppmich, Karl**
**Koenigsbacher Strasse 134**
**W-6700 Ludwigshafen(DE)**
Erfinder: **Seiler, Erhard, Dr.**
**Erpolzheimer Strasse 1**
**W-6700 Ludwigshafen(DE)**

## Beschreibung

Die Erfindung betrifft eine thermoplastische Formmasse auf der Grundlage von Polycarbonaten, 2 Pfropfmischpolymerisaten unterschiedlicher Pfropfgrundlage (ASA + AES) und Vinylaromat/AN enthaltenden Copolymerisaten, nämlich eine Formmasse, bestehend aus, bezogen auf die Komponenten A, B und C,

A    mindestens 10 Gew.-% mindestens eines Polycarbonats mit einer relativen Viskosität von 1,1 bis 1,5,

B    10 bis 50 Gew.-% mindestens eines Pfropfmischpolymerisates,

C    10 bis 50 Gew.-% mindestens eines thermoplastischen, mindestens ein vinylaromatisches Monomeres mit 8 bis 12 C-Atomen und Acrylnitril enthaltenden Copolymerisates

und gegebenenfalls

D    0,1 bis 25 Gew.-%, bezogen auf A + B + C, an üblichen Zusatzstoffen.

Zum Stand der Technik nennen wir:

(1) DE-PS 11 70 141
(2) DE-PS 18 10 993
(3) DE-AS 20 37 419
(4) DE-PS 22 59 564
(5) DES-OS 29 40 804
(6) DES-OS 32 10 284
(7) DES-OS 32 45 292
(8) DE-OS 34 14 118
(9) EP-A 107 303
(10) EP-A 131 188

Mischungen von Styrol- und Acrylnitril enthaltenden schlagzähen Polymerisaten mit Polycarbonaten sind in (1) und (2) beschrieben. Diese bekannten Formmassen besitzen im allgemeinen zufriedenstellende Eigenschaften. Häufig wird aber eine höhere Zähigkeit, eine höhere Wärmeformbeständigkeit, vor allem aber eine verbesserte Witterungsbeständigkeit angestrebt. In (3), (4) und (6) werden deshalb zur Verbesserung der Beständigkeit gegen Licht und Wärme Formassen beschrieben, die aus Polycarbonaten und ASA-Polymerisaten aufgebaut sind. In (7) ist eine Abmischung aus Polycarbonaten und ASA beschrieben, wobei die Pfropfhülle des Mischpolymerisates 2-stufig aufgebaut ist. Eine weitere Verbesserung ergibt sich nach (8) durch einen dreistufigen Aufbau der Pfropfhülle des Mischpolyrisats, wobei in der ersten Stufe im wesentlichen Styrol, in der zweiten Stufe ein Gemisch aus Styrol mit Acrylnitril und in der dritten Stufe Methylmethacrylat auf einen vernetzten Kautschuk aufgepfropft wird. In (5) wird einem ASA-Polymerisat eine mit gepfropften EPIM-Kautschuk modifizierte SAN-Hartkomponente zugesetzt. Pfropfkautschuke auf EPDM-Basis als Schlagzähkomponente für Blends sind in (9) und (10) beschrieben. Häufig genügt bei diesen Formmassen die Zähigkeit und Wärmeformbeständigkeit nicht den ständig steigenden Ansprüchen, insbesondere aber ist die Verarbeitbarkeit unbefriedigend und es werden zur Erzielung guter Zähigkeiten sehr hohe Verarbeitungstemperaturen benötigt. Ein weiterer Schwachpunkt der bekannten Formmassen ist die ungenügende Zähigkeit von Spritzgußteilen an der Angußstelle.

Aufgabe der vorliegenden Erfindung war es deshalb, Formmassen auf Basis von Polymermischungen, enthaltend Polycarbonat und Acrylsäureesterpfropfmischpolymerisate, zu entwickeln, die diese Nachteile nicht aufweisen. Insbesondere sollte das Verarbeitungsverhalten im Spritzguß und die Kerbschlagzähigkeit (nach DIN 53 453) verbessert werden. Ferner sollten die Zähigkeit von Formkörpern am Anguß angehoben und ein gutes gleichmäßiges Aussehen auch eingefärbter Formteile erreicht werden (keine Bindenahtmarkierungen).

Diese Aufgabe wird durch eine Formmasse der eingangs angegebenen Art gelöst, die erfindungsgemäß als Komponente B enthält

$B_1$ 30 bis 70 Gew.-%, bezogen auf B, eines ersten Pfropfmischpolymerisates, das aufgebaut ist aus

$a_1$) mindestens einem Elastomeren (Kautschuk) mit einer Glastemperatur von -60 bis -40°C und weniger als 20 Doppelbindungen pro 1000 C-Atome, als Pfropfgrundlage, das 40 bis 80 Gew.-%, bezogen auf $B_1$), ausmacht und ein Ethylen und Propylen enthaltendes Copolymerisat darstellt, und

$a_2$) einer Pfropfhülle auf dieses Elastomere, die 20 bis 60 Cew.-%, bezogen auf $B_1$), ausmacht und aufgebaut ist aus

$a_{21}$) 50 bis 90 Gew.-%, bezogen auf $a_2$), mindestens einem monoethylenisch ungesättigten aromatischen Kohlerwasserstoff mit bis zu 12 C-Atomen und

$a_{22}$) 10 bis 50 Gew.-% mindestens einem damit copolymerisierbaren ethylenisch ungesättigten Monomeren und

$B_2$ 70 bis 30 Gew.-%, bezogen auf B, eines zweiten Pfropfmischpolymerisates, das durch Emulsionspolymerisation hergestellt worden ist und aufgebaut ist aus

$b_1$) mindestens einem Elastomeren (Kautschuk), das 40 bis 80 Gew.-%, bezogen auf $B_2$), ausmacht und hergestellt wird durch Polymerisation einer Monomermischung aus

$b_{11}$) 70 bis 99,9 Gew.-%, bezogen auf $b_1$), mindestens eines Alkylacrylats mit 4 bis 12 Rohlenstoffatomen im Alkylrest

$b_{12}$) 0 bis 30 Gew.-%, bezogen auf $b_1$),

mindestens eines weiteren copolymerisierbaren, monoethylenisch ungesättigten Monomeren und

b₁₃) 0,1 bis 5 Gew.-%, bezogen auf b₁), eines copolymerisierbaren polyfunktionellen, vernetzenden Monomeren und

b₂) einer Pfropfhülle auf dieses Elastomere, die 20 bis 60 Gew.-%, bezogen auf B₂), ausmacht und hergestellt ist durch Polymerisation der Monomerermischung b₂₁) und b₂₂) in Gegenwart des Elastomeren b₁) und aufgebaut ist aus

b₂₁) 50 bis 90 Gew.-%, bezogen auf b₂), mindestens eines monoethylenisch ungesättigten aromatischen Kohlenwasserstoffs mit bis zu 12 C-Atomen und

b₂₂) 10 bis 50 Gew.-% mindestens eines damit copolymerisierbaren ethylenisch ungesättigten Monomeren.

Im folgenden werden der Aufbau der Formmasse aus den Komponenten A bis D und die Herstellung der Formmasse beschrieben.

Die Formmasse enthält (besteht vorzugsweise aus) jeweils bezogen auf A, B (B₁ + B₂) + C, folgende Anteile der genannten Komponenten:

A: mindestens 10 Gew.-%, vorzugsweise mindestens 30 Gew.-%, insbesondere 45 bis 70 Gew.-7%

B (B₁ + B₂): 10 bis 50 Gew.-%, vorzugsweise 15 bis 40 Gew.-%, insbesondere 15 bis 30 Gew.-%

C: 10 bis 50 Gew .-%, vorzugsweise 10 bis 40 Gew.-%, insbesondere 15 bis 30 Gew.-%.

Bezogen auf 100 Gew.-Teile der Formmasse aus A, B (ΣB₁ + B₂) und C, können noch zugegen sein

D 0,1 bis 25 Gew.-Teile, vorzugsweise 0,1 bis 18 Gew.-Teile, an üblichen Zusatzstoffen

Komponente A

Die Polycarbonate (Komponente A) sind an sich bekannt.

Unter Polycarbonaten A im Sinne der erfindungsgemäßen Formmasse sollen Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl) ether. Es können aber auch alle anderen, für die Herstellung von Polycarbonaten geeigneten Bisphenole eingesetzt werden, wie sie u.a. in der Monographie H. Schnell, Chemistry and Physics of Polycarbonates, Interscience Publishers, New York, 1964, in der US-PS 2 999 835 und in der DE-OS 22 48 817 beschrieben sind. Besonders bevorzugt sind Polycarbonate auf der Basis von Bisphenol A, nämlich 2,2-Bis-(4-hydroxyphenyl)-propan. Die Synthese der Polycarbonate wird beispielsweise in der US-PS 2 999 835 und der GB-PS 772 627 beschrieben. Die Komponente A weist relative Viskositäten rel im Bereich von 1,1 bis 1,5 auf, entsprechend mittleren Molgewichten $M_w$ im Bereich von 25.000 bis 200.000.

Komponente B

Die Komponente B (Σ B₁ + B₂) ist aufgebaut aus einem ersten Pfropfmischpolymerisat B₁ und einem zweiten durch Emulsionspolymerisation hergestellten Pfropfmischpolymerisat B₂ (Summe B₁ + B₂ = B).

Erfindungswesentlich ist, daß die beiden Komponenten B₁ und B₂ im Gewichtsverhältnis von 70:30 bis 30:70 nebeneinander vorliegen. Bei stärker abweichendem Gewichtsverhältnis ergeben sich Formmassen, die solchen mit nur einer Pfropfkomponente B entsprechen und die eingangs geschilderten nachteiligen Eingenschaften wie geringe Kerbschlagzähigkeit und/oder schlechtes Aussehen von spritzgegossenen Formkörpern, aufweisen. Weitere Einzelheiten sind aus den Beispielen und den Vergleichsversuchen zu ersehen.

Der Aufbau und die Herstellung der Pfropfmischpolymerisate B₁ und B₂ sind an sich bekannt (vgl. z.B. DE-OS 28 26 925; US-PS 3 642 950; 4 166 081; 4 202 948).

Die Pfropfmischpolymerisate unterscheiden sich durch die unterschiedliche Art der Elastomeren (Pfropfgrundlage). Als solche wird im Pfropfmischpolymerisat B₁ (mindestens) ein Ethylen und Propylen enthaltendes Copolymerisat oder Terpolymerisat mit einer nur geringen Anzahl von Doppelbindungen (EPDM), im Pfropfmischpolymerisat B₂ ein sogenannter Acrylsäurealkylester-Kautschuk eingesetzt, der vernetzt ist.

Aufbau des ersten Pfropfmischpolymerisates B₁

Das Pfropfmischpolymerisat B₁ wird gebildet aus

a₁) mindestens einem Elastomeren (Kautschuk) als Pfropfgrundlage, das 40 bis 80 Gew.-%, vorzugsweise 45 bis 70 Gew.-%, jeweils bezogen auf B₁), ausmacht und ein Ethylene und Propylen enthaltendes Copolymerisat darstellt und

a₂) einer Pfropfhülle auf dieses Elastomere, die

aufgebaut ist aus

a$_{21}$) 50 bis 90 Gew.-%, vorzugsweise 70 bis 85 Gew.-%, jeweils bezogen auf a$_2$), mindestens eines monoethylenisch ungesättigten aromatischen Kohlenwasserstoffs mit 8 bis 12 C-Atomen und

a$_{22}$) 10 bis 50 Gew.-%, vorzugsweise 15 bis 30 Gew.-%, jeweils bezogen auf a$_2$), mindestens eines damit copolymerisierbaren ethylenisch ungesättigten Monomeren.

Als Kautschuke a$_1$) für das Pfropfmischpolymerisat B$_1$ werden solche verwendet, die eine Glastemperatur im Bereich von -60 bis -40° C aufweisen. Die Kautschuke haben nur eine geringe Anzahl von Doppelbindungen, d.h. weniger als 20 Doppelbindungen pro 1000 C-Atome, insbesondere 3 bis 10 Doppelbindungen pro 1000 C-Atome. Beispiele für solche Kautschuke sind aus Ethylen-Propylen bestehende Copolymerisate, sowie Ethylen-Propylen-Terpolymerisate. Letztere werden durch Polymerisation mindestens 30 Gew.-% Ethylen, mindestens 30 Gew.-% Propylen und 0,5 bis 15 Gew.-% einer nichtkonjugierten diolefinischen Komponente hergestellt. Als Terkomponente werden in der Regel Diolefine mit mindestens 5 Kohlenstoffatomen, wie 5-Ethylidennorbornen, Dicyclopentadien, 2,2,1-Dicycloheptadien und 1,4-Hexadien angewendet. Ferner sind geeignet Polyalkylenamere wie Polypentenamer, Polyoctenamer, Polydodecanamer oder Gemische dieser Stoffe. Ferner kommen auch teilhydrierte Polybutadienkautschuke in Betracht, bei denen mindestens 70 % der Restdoppelbindungen hydriert sind. Von den vorstehend genannten Kautschuken werden insbesondere die Ethylen-Propylen-Copolymerisate sowie die Ethylen-Propylen-Terpolymerisate (EPDM-Kautschuke) angewendet. In der Regel haben EPDM-Kautschuke eine Moneyviskosität ML$_{1+4'}$ (100° C) von 25 bis 120. Sie sind im Handel erhältlich.

Die Pfropfhülle a$_2$), die 20 - 60 Gew.-%, vorzugsweise 30 bis 55 Gew.-%, bezogen auf B$_1$, ausmacht, ist aufgebaut aus mindestens einem vinylaromatischen Monomeren a$_{21}$) mit 8 - 12 C-Atomen und mindestens einen weiteren damit copolymerisierbaren ethylenisch ungesättigten Monomeren a$_{22}$). Bevorzugt werden Styrol als vinylaromatisches Monomer a$_2$ 1) sowie Acrylnitril und/oder Methylmethacrylat als Comonomere a$_{22}$) eingesetzt.

Die Herstellung des Pfropfmischpolymerisats B$_1$ kann nach verschiedenen Methoden erfolgen. Vorzugsweise wird eine Lösung des EP(D)M-Elastomeren (Kautschuks) in dem Monomerengemisch und (gegebenenfalls) indifferenten Lösungsmitteln hergestellt und durch Radikalstarter, wie Azoverbindungen oder Peroxide bei höheren Temperaturen die Pfropfreakton durchgeführt. Beispielhaft seien die Verfahren der DE-AS 23 02 014 und DE-OS 25 33 991 genannt. Es ist auch möglich, wie in der DE-OS 25 16 32 beschrieben, die Polymerisation in Masse zu initiieren und nach einiger Zeit durch Zugabe von Suspensionsstabilisatoren und Wasser in Suspension zu überführen und dort zu Ende zu bringen oder wie in US-PS 4 202 948 beschrieben gänzlich in Suspenison zu arbeiten. Wird die Reaktion in einem Überschuß an Pfropfmonomeren durchgeführt, wie es bei der Herstellung der sogenannten AES-Polymerisate häufig geschieht, so wird neben der Pfropfung gleichzeitig eine beträchtliche Menge ungepfroptes Harz aus den Pfropfmonomeren a$_{21}$) und a$_{22}$) gebildet. Dieses Harz ist dann nicht als Teil des Pfropfmischpolymerisats B$_1$ zu sehen, sondern muß der separat hergestellten Hartkomponente C zugeschlagen werden.

Eine bevorzugte Ausführungsform (vgl. Experimenteller Teil) der Herstellung des Pfropfmischpolymerisats besteht darin, nur eine geringe Menge Pfropfmonomere zur Kautschuklösung (-suspension) zuzugeben, so daß nur ein sehr geringer Teil derselben nicht aufgepfropft wird. In diesem Fall wird das gesamte erhaltene Pfropfmischpolymerisat als Komponente B$_1$ betrachtet. Dies gilt auch für die Beispiele und Vergleichsversuche der vorliegenden Erfindung.

Aufbau von B$_2$

Das Pfropfmischpolymerisat B$_2$ stellt einen durch Emulsionspolymerisation erhaltenen sogenannten ASA-Pfropfkautschuk dar. Die Herstellung derselben ist an sich bekannt und z.B. in der DE-PS 12 60 135 beschrieben. B$_2$ wird gebildet aus

b$_1$) mindestens einem Elastomeren (Kautschuk), das 40 bis 80 Gew.-%, vorzugsweise 50 bis 75 Gew.-%, bezogen auf B$_1$), ausmacht und aus einer Monomermischung aus

b$_{11}$) 70 bis 99,9 Gew.-%, bezogen auf b$_1$), mindestens eines Alkylacrylats mit 4 bis 12 Kohlenstoffatomen im Alkylrest

b$_{12}$) 0 bis 30 Gew.-%, bezogen auf b$_1$), mindestens eines weiteren copolysmerisierbaren monoethylenisch ungesättigten Monomeren und

b$_{13}$) 0,1 bis 5 Gew.-%, bezogen auf b$_1$), eines copolymerisierbaren polyfunktionellen, vernetztenden Monomeren polymerisiert wird und

b$_2$) einer Pfropfhülle auf dieses Elastomere, die 20 bis 60 Gew.-%, vorzugsweise 25 bis 50 Gew.-%, bezogen auf B$_1$, ausmacht und aufgebaut ist aus

b$_{21}$) 50 bis 90 Gew.-%, bezogen auf b$_2$), mindestens eines monoethylenisch ungesättigten aromatischen Kohlenwasserstoffs mit bis zu 12 C-Atomen und

b$_{22}$) 10 bis 50 Gew.-% mindestens eines damit copolymerisierbaren ethylenisch ungesättigten Monomeren.

Als Monomere für die Herstellung des Elastomeren b$_1$) kommen in Betracht:

b$_{11}$) 70 bis 99,9 Gew.-%, vorzugsweise 70 bis 99 Gew.-%, bezogen auf b$_1$) eines Alkylacrylates mit 4 bis 8 C-Atomen im Alkylrest, vorzugsweise werden n-Butylacrylat und/oder 2-Ethylhexylacrylat angewendet, insbesondere n-Butylacrylat als alleiniges Alkylacrylat.

b$_{12}$) Gegebenenfalls kann das elastomere Polymerisat b$_1$) auch noch bis zu 30, insbesondere 20 bis 30 Gew.-%, jeweils bezogen auf b$_1$), eines weiteren copolymerisierbaren Monomeren b$_{12}$), wie Butadien, Isopren, Styrol, Acrylnitril, Methylmethacrylat und/oder Vinylmethylether enthalten.

b$_{13}$) Um vernetzte Acrylsäureester-Polymerisate zu erhalten, wird die Polymerisation der Acrylsäureester in Gegenwart von 0,1 bis 5 Gew.-%, vorzugsweise von 1 bis 4 Gew.-%, bezogen auf die bei der Herstellung der Pfropfgrundlage eingesetzten gesamten Monomeren, eines copolymerisierbaren, polyfunktionellen, vorzugsweise bi- oder trifunktionellen, die Vernetzung bewirkenden Monomeren b$_{13}$) durchgeführt. Als solche bi- oder polyfunktionellen Vernetzungs-Monomeren b$_{13}$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanat oder Triallylisocyanat. Als besonders günstiges Vernetzungsmonomeres hat sich der Acrylsäureester des Tricyclodecenylalkohols erwiesen (vgl. DE-PS 12 60 135).

Der Aufbau der Pfropfhülle der Pfropfmischpolymerisate B$_1$ und B$_2$ kann ein- oder zweistufig erfolgen, wobei vorzugsweise das Produkt B$_1$ zweistufig aufgebaut ist.

Im Falle des einstufigen Aufbaues der Pfropfhülle a$_2$ wird ein Gemisch der Monomeren a$_{21}$) und a$_{22}$) in dem gewünschten Gew.-Verhältnis im Bereich von 90:10 bis 65:35 in Gegenwart des Elastomeren a$_1$) in an sich bekannter Weise polymerisiert.

Im Falle eines zweistufigen Aufbaus der Pfropfhülle a$_2$) werden in der Verfahrensstufe I 20 bis 70 Gew.-%, vorzugsweise 25 bis 50 Gew.-%, bezogen auf a$_2$), ausschließlich monoethylenisch-ungesättigte aromatische Kohlenwasserstoffe mit 8 bis 12 C-Atomen (a$_{21}$) verwendet und in Gegenwart des Elastomeren a$_2$) in an sich bekannter Weise polymerisiert.

In der Verfahrensstufe II werden 30 bis 80 Gew.-%, insbesondere 50 bis 75 Gew.-%, jeweils bezogen auf a$_2$), einer Mischung aus den genannten monoethylenisch ungesättigten aromatischen Kohlenwasserstoffen a$_{21}$) und monoethylenisch ungesättigten Monomeren a$_{22}$) im Gewichtsverhältnis a$_{21}$)/a$_{22}$) von 90:10 bis 60:40, insbesondere von 80:20 bis 70:30 angewendet und in Gegenwart des Verfahrensproduktes der I. Stufe polymerisiert.

Als monoethylenisch ungesättigte vinylaromatische Monomere a$_{21}$) mit 8 bis 12 Kohlenstoffatomen kommen z.B. in Betracht Styrol, α-Methylstyrol und kernalkylierte Styrole, wie p-Methylstyrol und tert.-Butylstyrol oder deren Mischung. Besonders bevorzugt werden Styrol, α-Methylstyrol und p-Methylstyrol eingesetzt.

Als monoethylenisch ungesättigte copolymerisierbare Monomere a$_{22}$) sind Acrylnitril, (Meth)-Acrylsäurealkylester mit 1 bis 4 Kohlenstoffatomen im Alkylrest, Acrylsäure, Maleinsäureanhydrid, Acrylamid und/oder Vinylmethylether und deren Mischungen zu nennen. Besonders bevorzugt werden Acrylnitril, Ethylacrylat, Methylmethacrylat und Gemische aus diesen angewendet. Als besonders bevorzugte Monomeren-Gemische werden vor allem Styrol und Acrylnitril, α-Methylstyrol und Acrylnitril und Styrol, Acrylnitril und Methylmethacrylat eingesetzt.

Insbesondere werden beim ein- oder zweistufigen Aufbau der Pfropfhülle a$_2$ im Pfropfmischpolymerisat B$_1$ nur Styrol und Acrylnitril im Gewichtsverhältnis von 60:40 bis 90:10, vorzugsweise von 70:30 bis 85:15 angewendet.

Die bei der Herstellung der Pfropfmischpolymerisate B$_1$ und B$_2$ bei bevorzugter Ausführung entstehenden geringen Mengen an nicht gepfropften Anteilen an (Co)polymerisaten aus den Pfropfmonomeren werden im Sinne der vorliegenden Erfindung den Komponenten B$_1$ und B$_2$ zugerechnet.

Komponente C

Zusätzlich zu der Komponente A und den beiden Pfropfmischpolymerisaten B$_1$ und B$_2$ enthalten die erfindungsgemäßen Formmassen als weitere Komponente C eine Hartkomponente (Harz) aus einem oder mehreren Copolymerisaten von Styrol und Acrylnitril. Der Acrylnitril-Gehalt in diesen Copolymerisaten der Hartkomponente C soll 18 bis 40 Gew.-%, vorzugsweise 20 bis 36 Gew.-%, bezogen auf das Copolymerisat betragen. Zu dieser Hartkomponente C zählen nicht die bei der Pfropfmischpolymerisation zur Herstellung der Komponente B entstehenden freien, nicht gepfropften Styrol und Acrylnitril enthaltenden Copolymerisate.

Bei dieser Hartkomponente C kann es sich um ein Styrol/Acrylnitrol-Copolymerisat, ein α-Methylstyrol/Acrylnitril-Copolymerisat, ein α-Methylstyrol/Styrol/Acrylnitril-, ein Styrol/Acrylnitril/Methylmethacrylat-, ein Styrol/Acrylnitril/Maleinsäureanhydrid oder ein Styrol/Acrylnitril/Acrylsäure-Terpolymerisat, bzw. ein α-Methylstyrol/Styrol/Acrylnitril-Terpolymerisat handeln. Diese Copolymerisate können einzeln oder auch in Mischung miteinander eingesetzt werden, so daß es sich bei der Hartkomponente C der erfindungsgemäßen Mischungen beispielsweise um eine Mischung aus einem Styrol/Acrylnitril-Copolymerisat und einem α-Methylstyrol/Acrylnitril-Copolymerisat handeln kann. In dem Fall, in dem die Hartkomponenten C der erfindungsgemäßen Massen aus einer Mischung von einem Styrol/Acrylnitril-Copolymerisat und einem α-Methylstyrol/Acrylnitril-Copolymerisat besteht, soll der Acrylnitrilgehalt der beiden Copolymerisate tunlichst nicht mehr als 10 Gew.-%, vorzugsweise nicht mehr als 5 Gew.-%, bezogen auf das Copolymerisat, voneinander abweichen.

Die Hartkomponente C der erfindungsgemäßen Formmassen besteht jedoch vorzugsweise aus einem Styrol/Acrylnitril-Copolymerisat.

Die Hartkomponente C kann nach den herkömmlichen Methoden erhalten werden. So kann die Copolymerisation des Styrols und/oder α-Methylstyrols mit dem Acrylnitril in Masse, Lösung, Suspension oder wäßriger Emulsion durchgeführt werden. Die Hartkomponente C hat vorzugsweise eine Viskositätszahl von 40 bis 100, insbesondere 50 bis 80.

Komponente D

Die erfindungsgemäße Formmasse kann als Komponente D Zusatzstoffe enthalten, die für Polycarbonate, SAN-Polymerisate und Pfropfmischpolymerisate auf Basis von ASA und AES oder deren Mischungen typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen erforderlich sind. Von den Schmiermitteln sind insbesondere diejenigen auf Basis von Ethylen- und Propylenoxid aufgebauten Pluriole ® zu nennen, die bevorzugt angewendet werden, um die Verarbeitungseigenschaften der Formmassen auf einem hohen Niveau zu halten.

Als Flammschutzmittel können insbesondere die in der deutschen Patentanmeldung P 34 36 815.9 genannten Mittel verwendet werden, wobei insbesondere der Poly(tetrabrombisphenol-A-Glycidyl)ether mit einem Molgewicht von 40.000 bevorzugt wird (Produkt F 2400 ® von Makhteshim).

Herstellung der Formmasse

Das Mischen der Komponenten A, B₁, B₂, C und gegebenenfalls D kann nach allen bekannten Methoden erfolgen. Vorzugsweise geschieht jedoch das Mischen der Komponenten A, B₁, B₂ und C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponente B₂) können aber auch teilweise entwässert oder direkt als Dispersion mit der Komponente C und dann mit dem Polycarbonat A, und der Komponente D, vermischt werden, wobei dann während des Vermischens die vollständige Trocknung des Pfropfmischpolymerisates erfolgt.

Die Herstellung der Formmasse erfolgt z.B. dadurch, daß eine Schmelze der harten Polymerisate, Komponente A und Komponente C mit den Pfropfmischpolymerisaten B₁ und B₂ bei Temperaturen über 200° C intensiv vermischt wird. Sie erfolgt, um eine besonders homogene Verteilung der Weichphase in der Hartmatrix zu erzielen, bevorzugt dadurch, daß man in die Schmelze der Polycarbonate (Komponente A), z.B. in einem Extruder mit Vakuumentgasung die gefällten Pfropfmischpolymerisate B₁ und B₂, die einen Restwasser-bzw. Restlösungsmittelgehalt von 10 bis 40 Gew.-% aufweisen, bei Temperaturen über 180° C einbringt und intensiv vermischt.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellten Formmassen Formteile durch Spritzgießen für den Automobilbau hergestellt.

Die in der vorliegenden Anmeldung beschriebenen Parameter können wie folgt bestimmt werden:

1. Die Kerbschlagzähigkeit, $a_k$, in [kJ/m²], der Proben wurde nach DIN 53 453 an bei 260° C gespritzten Normkleinstäben bei 23° C gemessen.

2. Die Bruchenergie, $W_{50}$, (Nm), wurde bei -40° C gemäß DIN 53 443 an ebenfalls bei 260° C gespritzten Normkleinstäben gemessen.

3. a) die Viskositätszahl (VZ) des eingesetzten Polycarbonats wurde in einer 0,5-%igen Lösung in Melthylenchlorid bei 23° C gemessen;

b) die der SAN-Copolymerisate in 0,5-%iger Lösung in Dimethylformamid bei 23° C.

4. Die Durchstoßarbeit am Anguß DSA$_{Anguß}$ (Nm) wurde nach DIN 53 453 an 2 mm dicken 60 x 60 mm quadratischen Platten, die aus einem größeren bei 280° C gespritzten Plattenteil um die Angußstelle ausgesägt worden waren, bestimmt. Die Prüfung erfolgte bei Raumtemperatur, der Schlag auf die Angußseite.

5. Der Farbeindruck wurde visuell an mit 1 % Ruß (Black Pearl) schwarz eingefärbten bei 280° C gespritzten Testkästchen ermittelt. Beurteilt wurde die Gleichmäßigkeit des Farbeindrucks. Dabei bedeuten:

2 = gleichmäßige Einfärbung, keine Fließlinien, kräftiger Farbeindruck

3 = gleichmäßige Einfärbung, aber etwas schwächerer Farbeindruck (heller)

4 = sehr schwacher Farbeindruck (nur Pastellton)

5 = ungleichmäßiger Farbeindruck durch Fließmarkierungen.

Für die Herstellung erfindungsgemäßer Formmassen und Massen für Vergleichsversuche wurden die nachfolgend beschriebenen Produkte verwendet.

Komponente A

Als Komponente A wurden handelsübliche Polycarbonate auf Basis von Bisphenol A, Lexan® oder Makrolon®, mit einer relativen Viskosität (gemessen in 0,5-%iger Lösung in Methylenchlorid) von 1,30 ml/g A.1) bzw. an 1,33 ml/g (A-2) eingesetzt.

Komponente B

Als Komponente B wurden die im folgenden beschriebenen Pfropfmischpolymerisate eingesetzt.

(a) Herstellung des Pfropfmischpolymerisates B$_1$

In den Beispielen und Vergleichsversuchen wurde ein EPDM-Kautschuk mit einem Propylengehalt von ca. 50 Gew.%, einem Ethylengehalt von 43 Gew.-% und einem 5-Ethylidennorbornengehalt von 7 Gew.-% verwendet. Der Kautschuk besaß eine Mooney-Plastizität (ML 1 + 4, 100° C) von 75.

Komponente (B$_1$-1)

Eine Lösung von 30 Teilen EPDM-Kautschuk in 22 Teilen Styrol, 8 Teilen Acrylnitril und 50 Teilen Ethylbenzol sowie 0,3 Teilen Di-tert-butyl-peroxid wird in 12 Stunden bei Temperaturen von 105 bis 135° C in mehreren Reaktionszonen bis zu vollständigem Umsatz polymerisiert und anschließend über ein Entgasungsaggregat bei 220 bis 240° C im Vakuum vom eingesetzten Lösungsmittel befreit. Der anfallende Pfropfkautschuk wird mit 60 Teilen eines Copolymerisates C (C-1 bzw. C-2) auf einem Extruder abgemischt und granuliert.

Komponente (B$_1$-2)

30 Teile EPDM-Kautschuk werden in 280 Teilen Toluol gelöst. Eine Monomermischung aus 27,5 Teilen Styrol und 9 Teilen Acrylnitril wird gemeinsam mit 0,18 Teilen tert-Butylperbenzoat und 0,18 Teilen Dicumylperoxid zugegeben und 4 Stunden bei 110° C sowie 10 Stunden bei 130° C polymerisiert. Der Pfropfkautschuk wird in Methanol ausgefällt und getrocknet. Die Ausbeute beträgt ca. 90 %.

(b) Herstellung des Pfropfmischpolymerisats B$_2$

(a$_1$) 16 Teile Butylacrylat und 0,4 Teile Tricyclodecenylacrylat (DCPA) werden in 150 Teilen Wasser unter Zusatz von einem Teil des Natriumsalzes einer C$_{12}$- bis C$_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60° C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltne Latex des vernetzten Butylacrylat-Polymerisats hatte einen Feststoffgehalt von 40 Gew.-%.

(a$_2$) 150 Teile des nach (a$_1$) erhaltenen Polybutylacrylat-Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylperoxid 4 Stunden auf 65° C erhitzt. Nach Beendigung der Pfropfmischpolymerisation wurde das Polymerisationsprodukt mittels Calciumchloridlösung bei 95° C aus der Dispersion gefällt, mit Wasser gewaschen und im warmen Luftstrom getrocknet. Der Pfropfgrad des Pfropfmischpolymerisats betrug 35 %, der Teilchengröße 91 nm.

Komponente C

C-1

Ein Monomerengemisch aus Styrol und Acrylnitril wurde unter üblichen Bedingungen in Lösung
polymerisiert. Das erhaltene Styrol/Acrylnitril-Copolymerisat hatte einen Acrylnitril-Gehalt von 35 %
und eine Viskositätszahl von 80 ml/g.

C-2

Es wurde ein auf gleiche Art wie C-1 hergestelltes S/AN-Copolymerisat mit 25 Gew.-% AN-
Gehalt und einer Viskositätszahl von 85 ml/g eingesetzt.

C-3

Es wurde ein analog hergestelltes Copolymerisat aus α-Methylstryol und Acrylnitril mit 30 % AN
und einer Viskositätszahl von 55 ml/g eingesetzt.
Die Erfindung wird durch die nachfolgenden
Beispiele näher erläutert. Die in den Beispielen
genannten Teile und Prozente beziehen sich, sofern nicht anders angegeben, auf das Gewicht.

Beispiele 1 bis 5 und Vergleichsversuche A bis D

Die in der Tabelle angegebnenen Gewichtsteile
der Komponente A, B ($B_1 + B_2$) und C wurden in
trockener Form mit zusätzlich jeweils 0,5 Teilen
®Pluriol PE 3100, einem linearen aus Ethylenoxid
(10 Gew.-%) und Propylenoxid (90 Gew.-%) aufgebauten Dreiblock-Copolymerisat XYX mit einer molaren Masse des Y-Blocks von 950 auf einem Fluidmischer gemischt und bei 250° C auf einem Doppelschneckenextruder, z.B. ZSK-Typ von Werner &
Pfleiderer, extrudiert. Aus dem getrockneten Granulat der Proben wurden die Formmassen für die
Eigenschaftsprüfungen durch Spritzgießen hergestellt. Die Einfärbung mit Ruß erfolgte durch Sekundärkonfektionierung mit 5 Teilen eines 20-
%igen Rußbatchs in PSAN.

Tabelle

| Beispiele | Mischung | | | | | | | | $a_k$ (RT) | $W_{50}$ (-40°C) | DSA-Anguß | Farbeindruck |
|---|---|---|---|---|---|---|---|---|---|---|---|---|
| | A-1 | A-2 | B1-1 | B1-2 | B2 | C-1 | C-2 | C-3 | | | | |
| Vergleichsversuche A | 60 | — | 20* | — | — | 20* | — | — | 28 | 20 | 5 | 4 |
| B | 60 | — | — | 20 | — | — | 20 | — | 35 | 28 | 8 | 4 |
| C | — | 60 | — | — | 20 | 20 | — | — | 65 | 55 | 10 | 5 |
| D | — | 60 | — | 20 | — | — | — | 20 | 33 | 30 | 6 | 4 |
| Beispiel 1 | 60 | — | 10* | — | 10 | 10* | — | 10 | 58 | 61 | 15 | 2 |
| 2 | 60 | — | — | 10 | 10 | — | 20 | — | 63 | 68 | 17 | 2 |
| 3 | — | 60 | 10* | — | 10 | — | 20* | — | 59 | 67 | 18 | 2 |
| 4 | 45 | — | 15* | — | 15 | 15* | — | 10 | 47 | 43 | 15 | 2 |
| 5 | — | 70 | — | 5 | 10 | — | 15 | — | 55 | 68 | 19 | 2 |

* als Coextrudat eingesetzt

EP 0 244 857 B1

**Ansprüche**

1. Thermoplastische Formmasse, bestehend aus, bezogen auf die Komponenten A, B und C,

   A    mindestens 10 Gew.-% mindestens eines Polycarbonats mit einer relativen Viskosität von 1,1 bis 1,5

   B    10 bis 50 Gew.-% mindestens eines Pfropfmischpolymerisates,

   C    10 bis 50 Gew.-% mindestens eines thermoplastischen, mindestens ein vinylaromatisches Monomeres mit 8 bis 12 C-Atomen und Acrylnitril enthaltenden Copolymerisates und gegebenenfalls

   D    0,1 bis 25 Gew.-%, bezogen auf A + B + C, an üblichen Zusatzstoffen, dadurch gekennzeichnet, daß die Komponente B besteht aus

   $B_1$ 30 bis 70 Gew.-%, bezogen auf B, eines ersten Pfropfmischpolymerisates, das aufgebaut ist aus

   $a_1$) mindestens einem Elastomeren (Kutschuk) mit einer Glastemperatur von -60 bis-40° C und weniger als 20 Doppelbindungen pro 1000 C-Atome, als Pfropfgrundlage, das 40 bis g0 G.-%, bezogen auf $B_1$), ausmacht und ein Ethylen und Propylen enthaltendes Copolymerisat darstellt, und

   $a_2$) einer Pfropfhülle auf dieses Elastomere, die 20 bis 60 Gew.-%, bezogen auf $B_1$), ausmacht und aufgebaut ist aus

   $a_{21}$) 50 bis 90 G.-%, bezogen auf $a_2$), mindestens einem monoethylenisch ungesättigten aromatischen Kohlenwasserstoff mit bis zu 12 C-Atomen und

   $a_{22}$) 10 bis 50 Gew.-% mindestens einem damit copolymerisierbaren ethylenisch ungesättigten Monomeren und

   $B_2$ 70 bis 30 Gew.-%, bezogen auf B, eines zweiten Pfropfmischpolymerisates, das durch Emulsionspolymerisation hergestellt worden ist und aufgebaut ist aus

   $b_1$) mindestens eine Elastomeren (Kautschuk), das 40 bis 80 Gew.-%, bezogen auf $B_2$), ausmacht und hergestellt wird durch Polymerisation einer Monomermischung aus

   $b_{11}$) 70 bis 99,9 Gew.-%, bezogen auf $b_1$), mindestens eines Alkylacrylats mit 4 bis 12 Kohlenstoffatomen im Alkylrest

   $b_{12}$) 0 bis 30 Gew.-%, bezogen auf $b_1$), mindestens eines weiteren copolymerisierbaren, monoethylenisch ungesättigten Monomeren und

   $b_{13}$) 0,1 bis 5 Gew.-%, bezogen auf $b_1$), eines copolymerisierbaren polyfunktionellen, vernetzenden Monomeren und

   $b_2$) einer Pfropfhülle auf dieses Elastomere, die 20 bis 60 Gew.-%, bezogen auf $B_2$), ausmacht und hergestellt ist durch Polymerisation der Monomerermischung $b_{21}$) und $b_{22}$) in Gegenwart des Elastomeren $b_1$) und aufgebaut ist aus

   $b_{21}$) 50 bis 90 Gern.-%, bezogen auf $b_2$), mindestens eines monoethylenisch ungesättigten aromatischen Kohlenwasserstoffs mit bis zu 12 C-Atomen und

   $b_{22}$) 10 bis 50 Gern.-% mindestens eines damit copolymerisierbaren ethylenisch ungesättigten Monomeren.

2. Thermoplastische Formmasse nach Anspruch 1, gekennzeichnet durch folgende Gehalte:

   A    mindestens ,30 Gew.-%,

   B    15 bis 40 Gew.-% und

   C    10 bis 40 Gew.-% sowie gegebenenfalls

   D    0,1 bis 25 Gew.-%, bezogen auf A bis C.

3. Thermoplastische Formmasse nach den Ansprüchen 1 und 2, dadurch gekennzeichnet, daß die Komponente C aufgebaut ist aus 82 bis 60 Gew.-% mindestens eines vinylaromatischen Monomeren mit 8 bis 12 C-Atomen und 18 bis 40 Gew.-% Acrylnitril.

4. Thermoplastische Formmasse nach den Ansprüchen 1 bis 3, dadurch gekennzeichnet, daß die Komponente B besteht aus

   $B_1$ 30 bis 70 Gew.-% berogenaüf B, eines ersten Pfropfmischpolymerisats, aufgebaut aus

   $a_1$) 40 bis 80 Gew.-%, bezogen auf $B_1$, eines durch Polymerisation von mindestens 30 Gew.-% Ethylen, mindestens 30 Gew.-% Propylen und 0,5 bis 15 Gew.-% eines nichtkonjugierten Diens hergestellten Terpolymerisates (EPDM) als Pfropfgrundlage und

   $a_2$) 20 bis 60 Gew.-% bezogen auf $B_1$, einer Pfropfhülle aus

   $a_{21}$) 60 bis 85 Gew.-% Styrol und

   $a_{22}$) 15 bis 40 Gew.-% Acrylnitril und

   $B_2$ 70 bis 30 Gew.-%, bezogenaüf B, eines zweiten Pfropfmischpolymerisats, das dürch Emulsionspolymerisation hergestellt werden ist und aufgebaut ist aus

$b_1$) 40 bis 80 Gew.-%, bezogen auf $B_2$, eines Elastomeren (Kautschuk) auf Basis von mit 0,1 bis 5 Gew.-%, bezogen auf $b_1$), Tricyclodecenylacrylat vernetzten Poly-n-butylacrylates und

$b_2$) 20 bis 60 Gew.-%, bezogen auf $B_2$, einer Pfropfhülle auf dieses Elastomere aus

$b_{21}$) 60 bis 85 Gew.-% Styrol und

$b_{22}$) 15 bis 40 Gew.-% Acrylnitril.

5. Thermoplastische Formmasse nach den Ansprüchen 1 bis 4, dadurch gekennzeichnet, daß das erste Pfropfmischpolymerisat $B_1$ eine Pfropfhülle $a_2$ enthält, die durch sukzessive Polymerisation in 2 Verfahrensschritten hergestellt wird, wobei in der ersten Verfahrensstufe

I 20 bis 70 Gew.%, bezogen auf $a_2$), ausschließlich des monoethylenisch ungesättigten aromatischen Kohlenwasserstoffs mit 8 bis 12 C-Atomen $a_{21}$), in Gegerwart des Elastomeren $b_1$, und in einer zweiten Verfahrensstufe

II 30 bis 80 Gew.-%, bezogen auf $a_2$), eines Gemisches aus dem monoethylenisch ungesättigten aromatischen Kohlenwasserstoff mit 8 bis 12 Kohlenstoffatomen, $a_{21}$, und mindestens einem damit copolymerisierbaren ethylenisch ungesättigten Monomeren $a_{22}$) im Gewichtsverhältnis von 80:20 bis 60:40 in Gegenwart des Reaktionsproduktes der ersten Verfahrensstufe umgesetzt wird.

6. Verwendung von Formmassen gemäß den Ansprüchen 1 bis 5 zur Herstellung von Formteilen.

7. Formteile aus Formmassen gemäß den Ansprüchen 1 bis 5.

## Claims

1. A thermoplastic molding material comprising, based on components A, B and C,

A 10% by weight or more of one or more polycarbonates having a relative viscosity of from 1.1 to 1.5 ml/g,

B from 10 to 50% by weight of one or more graft copolymers,

C from 10 to 50% by weight of one or more thermoplastic copolymers containing one or more vinylaromatic monomers having from 8 to 12 carbon atoms and containing acrylonitrile, and, if desired,

D 0.1 to 25% by weight, based on A + B + C, of conventional additives, wherein component B comprises

$B_1$ from 30 to 70% by weight, based on B, of a first graft copolymer built up from

$a_1$) one or more elastomers (rubbers) having a glass transition temperature of from -60 to -40 $^\circ$C and containing less than 20 double bonds per 1000 carbon atoms, as the graft base, which make up from 40 to 80% by weight, based on $B_1$) and are copolymers containing ethylene and propylene, and

$a_2$) a graft shell on these elastomers which makes up from 20 to 60% by weight, based on $B_1$), and is built up from

$a_{21}$) from 50 to 90% by weight, based on $a_2$), of one or more monoethylenically unsaturated aromatic hydrocarbons having up to 12 carbon atoms and

$a_{22}$) from 10 to 50% by weight of one or more ethylenically unsaturated monomers which can be copolymerized therewith, and

$B_2$ from 70 to 30% by weight, based on B, of a second graft copolymer prepared by emulsion polymerization and built up from

$b_1$) one or more elastomers (rubbers) which make up from 40 to 80% by weight, based on $B_2$), and are prepared by polymerizing a monomer mixture of

$b_{11}$) from 70 to 99.9% by weight, based on $b_1$), of one or more alkyl acrylates having from 4 to 12 carbon atoms in the alkyl moiety,

$b_{12}$) from 0 to 30% by weight, based on $b_1$), of one or more further copolymerizable, monoethylenically unsaturated monomers and

$b_{13}$) from 0.1 to 5% by weight, based on $b_1$), of a copolymerizable, polyfunctional, crosslinking monomer, and

$b_2$) a graft shell on these elastomers which makes up from 20 to 60% by weight, based on $B_2$), and is prepared by polymerizing the monomer mixture

$b_{21}$) and $b_{22}$) in the presence of the elastomers

$b_1$) and is built up from

$b_{21}$) 50 to 90% by weight, based on $b_2$), of one or more monoethylenically unsaturated aromatic hydrocarbons having up to 12 carbon atoms, and $b_{22}$) from 10 to 50% by weight of one or more ethylenically unsaturated monomers which are copolymerizable therewith.

2. A thermoplastic molding material as claimed in claim 1, having the following contents:
   - A     30% by weight or more,
   - B     from 15 to 40% by weight and
   - C     from 10 to 40% by weight, and, if used
   - D     from 0.1 to 25% by weight, based on A to C.

3. A thermoplastic molding material as claimed in claim 1 or 2, wherein C is built up from 82 to 60% by weight of one or more vinylaromatic monomers having from 8 to 12 carbon atoms, and from 18 to 40% by weight of acrylonitrile.

4. A thermoplastic molding material as claimed in claim 1 or 2 or 3, wherein component B comprises

   $B_1$ from 30 to 70% by weight, based on B, of a first graft copolymer built up from
   
   $a_1$) from 40 to 80% by weight, based on $B_1$, of a terpolymer (EPDM) prepared by polymerizing 30% by weight or more of ethylene, 30% by weight or more of propylene and from 0.5 to 15% by weight of a nonconjugated diene, as the graft base, and
   
   $a_2$) from 20 to 60% by weight, based on $B_1$, of a graft shell comprising
   
   $a_{21}$) from 60 to 85% by weight of styrene and
   
   $a_{22}$) from 15 to 40% by weight of acrylonitrile, and
   
   $B_2$ from 70 to 30% by weight, based on B, of a second graft copolymer built up from
   
   $b_1$) from 40 to 80% by weight, based on $B_2$, of an elastomer (rubber) based on poly-n-butyl acrylate crosslinked with from 0.1 to 5% by weight, based on $b_1$), of tricyclodecenyl acrylate, and
   
   $b_2$) from 20 to 60% by weight, based on $B_2$, of a graft shell on this elastomer, comprising
   
   $b_{21}$) from 60 to 85% by weight of styrene and
   
   $b_{22}$) from 15 to 40% by weight of acrylonitrile.

5. A thermoplastic molding material as claimed in claim 1 or 2 or 3 or 4, wherein the first graft copolymer $B_1$ contains a graft shell $a_2$ prepared by successive polymerization in two steps, where, in the first step,

I     from 20 to 70% by weight, based on $a_2$), of exclusively the monoethylenically unsaturated aromatic hydrocarbon having from 8 to 12 carbon atoms $a_{21}$) is reacted in the presence of the elastomer $b_1$, and, in a second step,

II     from 30 to 80% by weight, based on $a_2$), of a mixture of the monoethylenically unsaturated aromatic hydrocarbon having from 8 to 12 carbon atoms, $a_{21}$, and one or more ethylenically unsaturated monomers $a_{22}$) which are copolymerizable therewith, in a weight ratio of from 80:20 to 60:40, is reacted in the presence of the reaction product from the first step.

6. A method of using a molding material as claimed in claim 1 or 2 or 3 or 4 or 5 for producing moldings.

7. A molding produced from a molding material as claimed in claim 1 or 2 or 3 or 4 or 5.

**Revendications**

1. Matière à mouler thermoplastique qui, par rapport aux composants A, B et C, se compose
   - A     d'au moins 10% en poids d'au moins un polycarbonate possédant une viscosité relative de 1,1 à 1,5 ml/g,
   - B     de 10 à 50% en poids d'au moins un copolymère de greffage,
   - C     de 10 à 50% en poids d'au moins un copolymère thermoplastique, contenant au moins un monomère vinylaromatique comportant de 8 à 12 atomes de carbone et de l'acrylonitrile et éventuellement
   - D     de 0,1 à 25% en poids, par rapport à A + B + C, d'additifs usuels.
   caractérisée en ce que le composant B se compose de
   
   $B_1$ 30 à 70% en poids, par rapport à B, d'un premier copolymère de greffage, constitué
   
   $a_1$) d'au moins un élastomère (caoutchouc) possédant une température de transition vitreuse de -60 à -40° C et moins de 20 doubles liaisons par 1000 atomes de carbone, à titre de base de greffage, qui forme de 40 à 80% en poids, par rapport à $B_1$) et qui constitue un copolymère contenant de l'éthylène et du propylène, et
   
   $a_2$) d'une gaine ou enveloppe de greffage sur cet élastomère, qui forme de 20 à 60% en poids, par rapport à $B_1$) et qui se

compose

   $a_{21}$) de 50 à 90% en poids, par rapport à $a_2$), d'au moins un hydrocarbure aromatique à insaturation monoéthylénique, comportant jusqu'à 12 atomes de carbone et

   $a_{22}$) de 10 à 50% en poids d'au moins un monomere à insaturation éthylénique, copolymérisable avec celui-ci et

$B_2$ 70 à 30% en poids, par rapport à B, d'un second copolymère de greffage, préparé par polymérisation en émulsion et constitué

   $b_1$) d'au moins un élastomère (caoutchouc) qui forme de 40 à 80% en poids, par rapport à $B_2$) et préparé par la polymérisation d'un mélange de monomères constitué

   $b_{11}$) de 70 à 99,9% en poids, par rapport à $b_1$), d'au moins un acrylate d'alkyle dont le radical alkyle comporte de 4 à 12 atomes de carbone,

   $b_{12}$) de 0 à 30% en poids, par rapport à $b_1$), d'au moins un autre monomère à insaturation monoéthylénique, copolymérisable et

   $b_{13}$) de 0,1 à 5% en poids, par rapport à $b_1$), d'un monomère réticulant, polyfonctionnel, copolymérisable et

$b_2$) d'une gaine ou enveloppe de greffage sur cet élastomère, qui forme de 20 à 60% en poids, par rapport à $B_2$) et préparé par la polymérisation du mélange des monomères $b_{21}$) et $b_{22}$) en présence de l'élastomère $b_1$) et constitué

   $b_{21}$) de 50 à 90% en poids, par rapport à $b_2$), d'au moins un hydrocarbure aromatique, à insaturation monoéthylénique, comportant jusqu'à 12 atomes de carbone et

   $B_{22}$) de 10 à 50% en poids d'au moins un monomère à insaturation éthylénique copolymérisable avec celui-ci.

2. Matière à mouler thermoplastique suivant la revendication 1, caractérisée par des teneurs suivantes en

   A   au moins 30% en poids,

   B   15 à 40% en poids,

   C   10 à 40% en poids, comme éventuellement aussi

   D   0,1 à 25% en poids, par rapport A à C.

3. Matière à mouler thermoplastique suivant les revendications 1 et 2, caractérisée en ce que le composant C est constitué de 82 à 60% en poids d'au moins un monomère vinylaromatique comportant de 8 à 12 atomes de carbone et de 18 à 40% en poids d'acrylonitrile.

4. Matière à mouler thermoplastique suivant les revendications 1 à 3, caractérisée en ce que le composant B est constitué de

   $B_1$ 30 à 70% en poids, par rapport à $B_1$, d'un premier copolymère de greffage composé

   $a_1$) de 40 à 80% en poids, par rapport à $B_1$, d'un terpolymère (EPDM) préparé par la polymérisation d'au moins 30% en poids d'éthylène, d'au moins 30% en poids de propylène et de 0,5 à 15% en poids d'un diène non conjugué, servant de base de greffage et

   $a_2$) de 20 à 60% en poids, par rapport à $B_1$, d'une gaine ou enveloppe de greffage formée

   $a_{21}$) de 60 à 85% en poids de styrène et

   $a_{22}$) de 15 à 40% en poids d'acrylonitrile et

$B_2$ 70 à 30% en poids, par rapport à $B_1$, d'un second copolymère de greffage préparé par polymérisation en émulsion et qui se compose

   $b_1$) de 40 à 80% en poids, par rapport à $B_2$, d'un élastomère (caoutchouc) à base de poly(acrylate de n-butyle) réticulé avec de 0,1 à 5% en poids, par rapport à $b_1$), d'acrylate de tricyclodécényle et

   $b_2$) de 20 à 60% en poids, par rapport à $B_2$, d'une gaine ou enveloppe de greffage sur cet élastomère, qui se compose

   $b_{21}$) de 60 à 85% en poids de styrène et

   $b_{22}$) de 15 à 40% en poids d'acrylonitrile.

5. Matière à mouler thermoplastique suivant les revendications 1 à 4, caractérisée en ce que le premier copolymère de greffage $B_1$ contient une enveloppe ou gaine de greffage $a_2$ que l'on obtient par polymérisation successive, en deux étapes opératoires, où, au cours de la première étape opératoire,

   I   On fait réagir de 20 à 70% en poids, par rapport à $a_2$), exclusivement de l'hydrocarbure aromatique à insaturation monoéthylénique comportant de 8 à 12 atomes de carbone $a_{21}$), en présence de l'élastomère $b_1$ et, au cours d'une seconde étape opératoire,

II    On fait réagir de 30 à 80% en poids, par rapport à $a_2$), d'un mélange de l'hydrocarbure aromatique à insaturation monoéthylénique comportant de 8 à 12 atomes de carbone, $a_{21}$) et d'au moins un monomère à insaturation éthylénique, copolymérisable avec celui-ci, $a_{22}$), dans le rapport pondéral de 80:20 à 60:40, en présence du produit de la réaction obtenu au cours de la première étape opératoire.

6. Utilisation de matières à mouler selon les revendications 1 à 5 pour la fabrication d'articles moulés.

7. Articles moulés obtenus à partir des matières à mouler selon les revendications 1 à 5.